Europäisches Patentamt

European Patent Office

Office européen des brevets

(19)

(11) Publication number: **0 064 038**
**A1**

(12) # EUROPEAN PATENT APPLICATION

(21) Application number: **82850060.3**

(22) Date of filing: **24.03.82**

(51) Int. Cl.³: **B 25 D 17/24**

(30) Priority: **15.04.81 SE 8102430**

(43) Date of publication of application: **03.11.82 Bulletin 82/44**

(84) Designated Contracting States: **AT BE CH DE FR GB IT LI**

(71) Applicant: **Atlas Copco Aktiebolag, Nacka (SE)**

(72) Inventor: **Wijk, Axel Gunnar, 55, Amatörvägen, S-122 40 Enskede (SE)**

(74) Representative: **Aslund, Roland et al, c/o Atlas Copco Aktiebolag Patent Department, S-105 23 Stockholm (SE)**

(54) Method and device for dampening compressive stress waves.

(57) In impact devices, for example rock drills and jack hammers, a compressive stress wave results from the hammer piston impacting on the tool (21), and propagates through the tool. If the compressive stress wave is transmitted through a chamber (17), filled with steel balls that are in butt contact with one another, its energy is transformed into thermal energy and dampens out. Such a ball-filled chamber can be used for testing the operation and output of an impact device, and can be used as so called reflex damper for dampening the compressive stress waves that may reflect at the bit end of the tool and propagate backwardly through the tool.

## Method and device for dampening compressive stress waves

This invention relates to a method and a device of dampening compressive stress waves that propagate through an elongate element, for example a drill stem for rock drilling as a result of frequent impacts from a power operated hammer.

There is a need for testing the operation of percussive tools such as jack hammers and rock drills both before delivery and at work shops. The output energy should preferably also be checked. Sometimes, it is also desirable to check the output energy at the worksite. Conventionally, the testing is carried out in a bench for the percussion tool. A work tool with a flat front surface is used which takes support against an oil chamber. The compressive stress waves that propagate through the work tool are reflected at the end of the work tool so that a considerable part of the impact energy is given back to the impact piston of the percussion tool and makes the impact piston bounce back from its anvil. This differs from normal working conditions and reduces the validity of the testing.

In some percussive drills there is a device for dampening the compressive stress waves that might propagate backwardly thorugh the drill stem due to a reflection at the rock. Such prior art devices as known from US patent 3 918 535 and US patent 4 073 350 do not transform the energy of the compressive stress wave to heat but they only reduce the amplitude and thus, the compressive stress waves propagate into the housing of the rock drill although at a reduced stress level.

It is an object of the invention to make it possible to dampen compressive stress waves more effectively and an ancillary object is to make it possible to test and check an impact device for example a percussive rock drill or jack hammer under conditions that are similar to normal working conditions.

The invention will be described with reference to the accompanying drawings that illustrate three embodiments of the invention.

Fig 1 is a longitudinal section through a device for testing rock drills at the work site.

Fig 2 is a longitudinal view partly in section of a bench for testing rock drills.

Fig 3 is a longitudinal section of a damping device of the test bench of Fig 2.

Fig 4 is a longitudinal section of a rock drill that has a device for damping the stress waves that are reflected back from the rock to the drill steel.

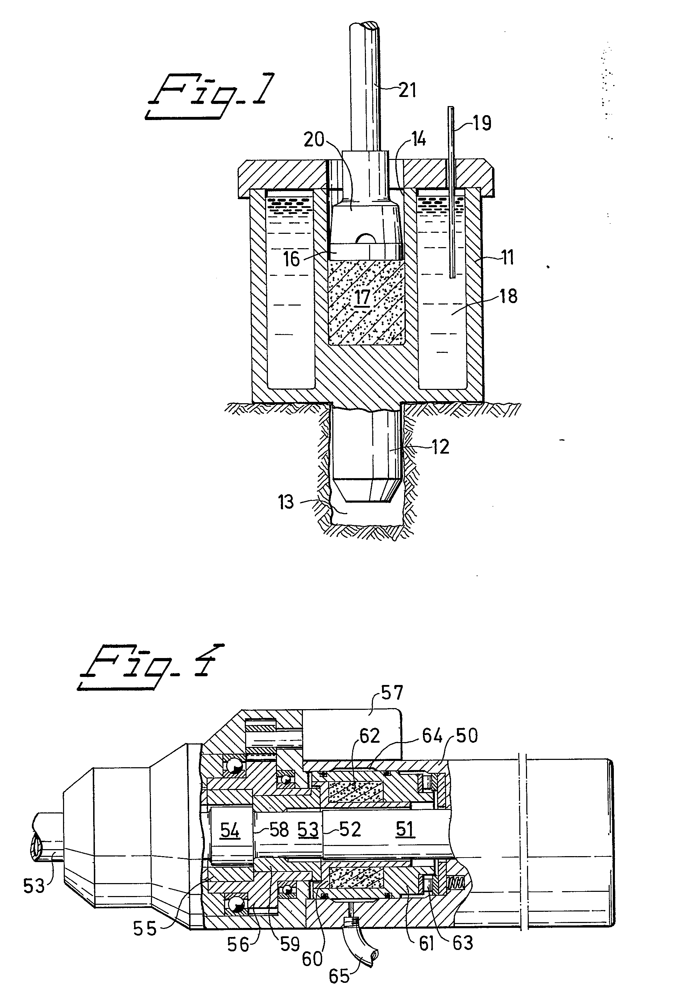

Fig 1 shows a damping device for testing a rock drill on the work site. It comprises a steel housing 11 with an extension 12 arranged to be inserted in a short borehole 13 in the rock. The housing 11 has a central blind bore 14 partly filled with steel balls or any other suitable granular matter. On top of the steel balls, there is a steel plate 16 so that a closed chamber 17 is formed which is completely filled with steel balls.

Around the bore 14, there is an annular chamber 18 filled with water or any other suitable liquid. The temperature of the liquid can be read on a thermometer 19. When either the output power or the impact energy per blow of a percussive rock drill is to be checked, the normal drill bit is removed and a similar bit 20 without inserts is mounted on the end of the drill rod 21 of the rock drill. The housing 11 is inserted in the rock as shown in Fig 1 and the feed force is applied to the rock drill. The rock drill is then operated for a predetermined period of time and the temperature rise in the liquid is noted. Alternatively to the water chamber 18 and the thermometer 19, the housing 11 can be solid and a thermoelement can be attached directly to the housing 11 and permit for remote reading of the temperature rise.

Each time the hammer piston of the non-illustrated percussive rock drill impacts upon the drill stem, its kinetic energy is transformed into a compressive stress wave which propagates through the drill stem at sound speed, that is at a speed of about 5000 m/s. The compression related to the stress wave is usually 1-2 mm for an ordinary rock drill and when a compressive stress wave reaches the plate 16, the plate is forced forwardly the corresponding length e.g. 1.5 mm at a speed of about half the piston impact velocity i.e. normally at a speed of 4-5 m/s. As a result, the steel balls just beyond the plate 16 are forced downwardly 1.5 mm, whereas the balls at the bottom cannot move. The movement results in elastic deformation of the balls and frictional movement between the outer balls and the envelop wall. Some frictional movements between the balls take also place. When the compressive stress wave is over, the balls force the plate 16 back to its initial position and frictional movements occur also during this return phase. For a normal impact frequency of about 50 Hz, the plate 16 is well back in its initial position before the next compressive stress wave reaches the plate Since the normal impact frequency for a rock drill or jack hammer is 10-100 Hz, the useful length of a compressive stress wave is usually about 1 m or less, and the waves move at about 5000 m/s, there is a relatively long time between the waves. The areas of the drill bit 20, the plate 16 and the chamber 18 can be chosen so that almost the entire energy of the compressive stress wave is absorbed by the damping chamber 17 and transformed into thermal energy. There can be air or another gaseous medium inbetween the steel balls. However, a thermoresistent liquid is preferable since it will transmit the thermal energy better and thereby increase the life of the balls. Still, the liquid will transmit the stress wave energy only to a negligible degree and it will therefore almost not affect the damping characteristics of the chamber. Silicone oil or mineral oil can be used.

If the feed force is too small to keep the balls constantly under pressure, that is, too small to hold the balls in firm contact with one another and with the walls, then the stiffness of the chamber 17 will vary and a variable part of the compressive stress wave will be reflected as a tensile stress wave. It is necessary that the balls are in firm contact with one another and with the walls of the chamber so that they will maintain their relative positions.

By varying the areas of the drill bit 20 and the chamber 17 and varying the material of the balls, it is possible to have a desired stiffness of the damping chamber 17. It might be desirable to test a rock drill also in a comparatively stiff chamber that reflects the compressive stress waves to a predetermined degree as compressive stress waves and in a comparatively weak chamber that reflects the compressive stress waves to a predetermined degree as tensile stress waves. This will simulate different working conditions. The easiest way of altering the stiffness of the damping chamber 17 is to replace balls with another Young's modulus for the balls in the chamber. The size of the chamber need not be altered. The balls can for example be made of mild steel, high quality steel, or so called hard metal (carbides).

The output power of the rock drill can be determined from the temperature rise and a diagram. The impact energy per blow can be calculated by dividing the output power with the number of impacts. The diagram must be made with the aid of rock drills with known output energy. There will be friction between the rotating bit and the plate 16 due to the rotation but this energy is rather constant and small as compared to the percussive energy. The output power of hydraulic rock drills is usually in the range of 5 kw to 20 kw and up to 90 % or more of this output can be transformed to thermal energy in the chamber 17.

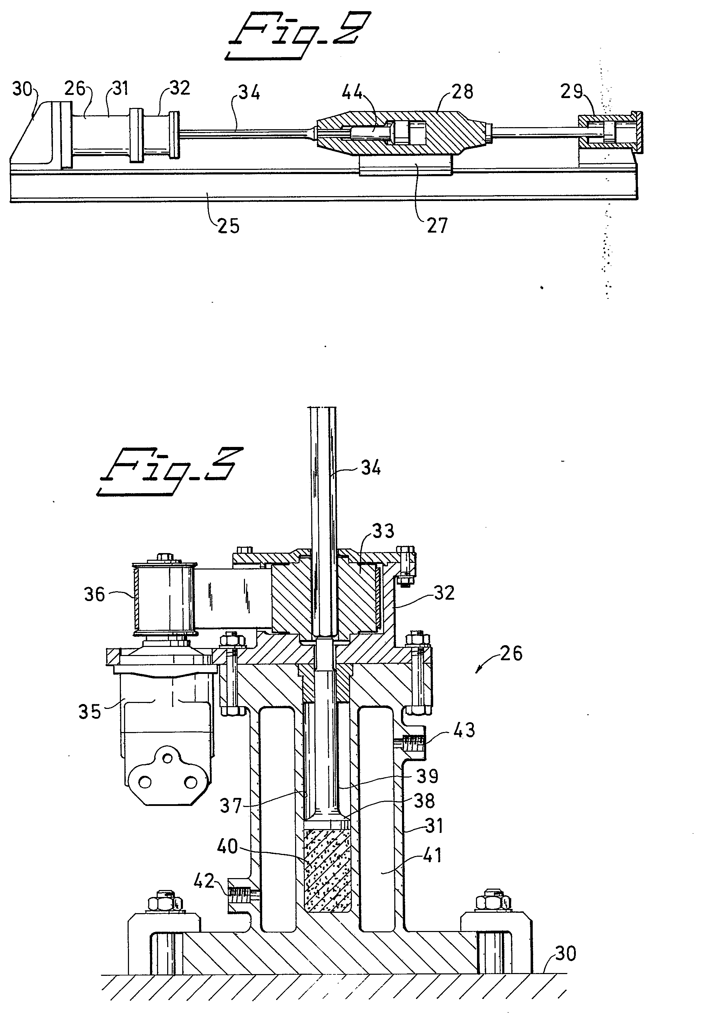

In Fig 2, a bench for testing rock drills is shown. It comprises a beam 25, a damping device 26, which is also shown in Fig 3, a cradle 27 for a percussive rock drill 28 and a hydraulic feeding cylinder 29 coupled to the rock drill. The damping device 26 comprises a bracket 30, a housing 31 screwed to the bracket 30 and a drill steel holder 32 screwed to the housing 31. The drill steel holder 32 comprises a rotatably journalled bushing 33 that has a hexagonal hole adapted to receive the hexagonal drill steel 34 which is cut off so that its front end is flat. The bushing 33 is coupled to a hydraulic rotary motor 35 by means of a belt 36. The housing 31 is made of steel and it has a cylinderical blind bore 37 partly filled with steel balls. A head 38 of a rod 39 closes a damping chamber 40

5                                                0064038

that is completely filled with steel balls. Around the bore 37 there
is an annular chamber 41 which has an inlet 42 and an outlet 43 for
water or other coolant.

The test bench shown in Figs 2 and 3 can be used both at the factory
before delivery of the rock drills and at work shops and service
centers. The hydraulic or pneumatic rock drill 28 that is to be
tested is mounted on the cradle 27 and the drill steel 34 is
inserted into the drill steel holder 32 as shown in Fig 2. The
hammer piston 44 of the rock drill is schematically indicated in Fig
2 whereas the rotation motor of the rock drill is not illustrated.
The hydraulic cylinder 29 is operated to apply a feed force on the
rock drill 28 which is slidable along the beam 25, and the rock
drill 28 is then operated to rotate the drill steel 34 and to impact
upon the rear end of the drill steel.

The hydraulic motor 35 is used to brake the rotation of the drill
steel 34 and it is used for indication of the torque of the rotation
motor of the rock drill. The heat generated by the friction between
the drill steel 34 and the rod 39 is small as compared to the impact
energy and comparatively constant.

Fig 4 shows, partly in a longitudinal section, a rock drill with a
damping device for the stress waves reflected from the rock. The
rock drill comprises a housing 50 in which a hammer piston 51 is
reciprocally driven by a pressure fluid e.g. hydraulic fluid or
compressed air. The piston 51 is arranged to periodically impact
upon the rear end face 52 of a drill stem adapter 53 which has an
enlarged portion 54 of non-circular cross section in engagement with
a bushing 55 of a rotatably journalled rotation chuck 56 so that the
adapter 53 can be rotated by a hydraulic or pneumatic rotary motor
57 which is coupled to the chuck 56.

The rear end surface 58 of the enlarged portion 54 of the adapter 53
takes support against a sleeve 59. The sleeve 59 abuts against
another sleeve 60 that together with a sleeve 61 forms a cylindrical
annular chamber 62 that is filled with steel balls. A roller bearing

0064038

63 is inserted between the housing and the sleeve 61 as a thrust bearing. Thus, the parts 55, 56, 59, 60, 61, 62 are rotatable as a unit. On the outside of the sleeve 61, there is a cooling chamber 64 which has an inlet 65 and a non-illustrated outlet for a coolant for example air, water, or hydraulic oil. The rock drill can be mounted on the feed beam of a rock drilling rig and the feed force applied to the rock drill by a feed motor of the feed beam or by any other means is thus transmitted from the housing 50 to the adapter 53 via the thrust bearing 63 and the ball filled chamber 62.

When, at its normal high frequency e.g. 50 Hz, the hammer piston impacts the adapter 53 which is part of the drill stem, compressive stress waves are generated which propagate through the drill stem to the drill bit. A part of the stress waves may be reflected as compressive stress waves at the contact surfaces between the rock and the drill bit and will propagate backwardly through the drill stem. A part of the compressive stress waves that are reflected will propagate into the sleeve 59 and the major part of the energy thereof or almost the entire energy thereof will be transformed into heat in the ball filled chamber 62. The stress waves will thus practically not reach the thrust bearing 63 and the housing 50. The reminder of the compressive stress waves that are reflected from the rock will propagate into the hammer piston 51 if the hammer piston is in contact with the adapter 53. If the rear end face 52 of the adapter is free, the compressive stress waves reaching the surface will be reflected once again but this time as tensile stress waves which will propagate forwardly through the drill stem. These tensile waves will return from the bit as compressive waves that will either be absorbed in the ball filled chamber 62 if the adapter 53 is supported by the surface 58 or will once again be reflected as tensile waves towards the bit if the adapter 53 is not in contact with the support surface 58.

In the dampening chambers 17 in Fig 1, 40 in Fig 3, and 62 in Fig 4, the size of the balls must be smaller than the width of the chambers and preferably smaller than half the width. This ensures wedging actions which would not occur if the balls were in straight lines. The balls can advantageously be of even size.

For various ball sizes, there is no significant difference as to the function. In a cylindrical chamber with a diameter of 5 cm, 1 mm steel balls and 10 mm steel balls have been equally efficient when tried. Smaller balls than 1 mmm are unpractical since they are likely to jam in the clearances e.g. the clearance between the plate 16 and the cylinder in Fig 1. The ball filled chamber 17, 40, 62 should not be too short. A length that equals the width will usually be on the safe side. It may be advantageous to use a length that is at least twice the width. These findings regarding the effects of ball size and chamber dimensions can be explained theoretically.

Steel balls intended for ball bearings are advantageous. Other hard non-plastic particles can also be used. Steel sand intended for shot blasting can be used but it has disadvantages as compared to steel balls. The particles are not of even size and they have a scale. The bulk of particles is compressed during the first hours of use and the descaling that occurs causes dust.

8                              0064038

Claims:

1.     A method of dampening frequent compressive stress waves that propagate through an elongated element, for example a drill stem (20, 53, 34) for rock drilling, as a result of repetitive impacts from a power operated hammer (43,51), c h a r a c t e r i z e d   i n that both a preload and the stress waves are transmitted from said elongated element (20, 53, 34) to a plurality of steel balls or other particles that are held in butt contact with one another so that the major part of the energy of the compressive stress waves is transformed into thermal energy while the balls or other particles substantially maintain their relative positions.

2.     A method according to claim 1, c h a r a c t e r i z e d   i n that it is used for testing an impact motor of which said hammer (43, 51) is part.

3.     A method according to claim 2, c h a r a c t e r i z e d   i n that the impact energy of the impact motor is calculated from said thermal energy which is read.

4.     A method according to claim 1, c h a r a c t e r i z e d   i n that it is used for absorbing compressive stress waves that after reflexion propagate backwardly through said elongate element.

5.     A device for dampening frequent compressive stress waves that propagate through an elongate element, for example a drill stem (21, 34, 53) for rock drilling, as a result of repetitive impacts from a power operated hammer (44, 51), comprising a damping chamber (17, 40, 62) operatively arranged between said elongate element (20, 34, 53) and a supporting element (11, 31, 61) for transmitting an axial preload therebetween and for dampening said waves, c h a r a c - t e r i z e d   i n  that said chamber (17, 40, 62) is filled with steel balls or other non-plastic particles of a size smaller than the transverse width of the chamber, said particles being in butt contact with one another.

6.    A device according to claim 5, c h a r a c t e r i z e d  i n that said damping chamber (17, 40) is cylindrical and a compressive stress wave transmitting element (16, 38), that has substantially the same area as the cylinder forms an end wall of said chamber.

7.    A device according to claim 5 or 6, c h a r a c t e r i z - e d  i n  that the damping chamber (17, 40, 62) has an axial length that exceeds its width.

0064038

1/2

Fig.1

Fig.4

*Fig.2*

*Fig.3*

**European Patent Office**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | DE - A1 - 2 456 090 (A.F. HYDRAULICS) <br> * claim 1 * <br> -- | 1 | B 25 D 17/24 |
| | | | **TECHNICAL FIELDS SEARCHED (Int.Cl. 3)** <br><br> B 25 D 17/24 <br> G 01 L 5/00 |

The present search report has been drawn up for all claims

| Place of search | Date of completion of the search | Examiner |
|---|---|---|
| Berlin | 05-07-1982 | ZAPP |